Europäisches Patentamt

European Patent Office

Office européen des brevets

(11) Veröffentlichungsnummer: **0 308 640**
**A2**

## (12) EUROPÄISCHE PATENTANMELDUNG

(21) Anmeldenummer: 88112771.6

(51) Int. Cl.⁴: **G01M 17/02**

(22) Anmeldetag: 05.08.88

(30) Priorität: 23.09.87 DE 3731924

(43) Veröffentlichungstag der Anmeldung:
29.03.89 Patentblatt 89/13

(84) Benannte Vertragsstaaten:
AT BE CH DE ES FR GB GR IT LI LU NL SE

(71) Anmelder: **Continental Aktiengesellschaft**
**Königsworther Platz 1**
**D-3000 Hannover 1(DE)**

(72) Erfinder: **Haack, Dietmar**
**Carl-Diem-Strasse 6**
**D-3257 Springe 2(DE)**

(54) Verfahren und Vorrichtung zur Messung des Rundlaufs bei einem Fahrzeugluftreifen mit gegen Felgenringhälften verfahrbaren Wulstaufnahmeringen.

(57) Verfahren und Vorrichtung zur Messung des Rundlaufs bei einem Fahrzeugluftreifen (11), der im Betriebszustand mit seinen Wülsten (18) am radial inneren Umfang einer Felge befestigt ist. Die Prüfvorrichtung (10) ist dazu mit einer zweigeteilten Prüffelge versehen, deren beide Felgenringhälften (12, 13) axial verschiebbar sind. Auf die Prüffelge wird ein zu prüfender, mit trapezförmig axial nach außen weisenden Seitenwänden gefertigter Reifen (17) in dieser seiner Trapezform aufgezogen. Gegen die axial auseinderfahrenden Felgenringhälften werden axial von außen Wulstaufnahmeringe (15) gefahren, die die Seitenwände umbiegen und in Felgensitzposition zur Anlage an die Felgenringhälften bringen. Der zu prüfende Reifen wird dabei zwischen den Felgenringhälften und den Wulstaufnahmeringen festgeklemmt.

FIG.1

## Verfahren und Vorrichtung zur Messung des Rundlaufs bei einem Fahrzeugluftreifen mit gegen Felgenringhälften verfahrbaren Wulstaufnahmeringen

Die Erfindung betrifft ein Verfahren und eine Vorrichtung zur Reifenaufnahme, insbesondere bei Messung des Rundlaufs bei einem Fahrzeugluftreifen, der im Betriebszustand mit seinen Wülsten am radial inneren Umfang einer Felge befestigt ist, mit einer Prüffelge, mit zwei axial verfahrbaren Felgenringhälften und einem gemeinsamen Felgenkranz, auf die ein zu prüfender, mit trapezförmig axial nach außen weisenden Seitenwänden gefertigter Reifen in Trapezform aufgezogen wird und eine Vorrichtung zur Durchführung dieses Verfahrens.

Herkömmliche Reifen, deren Wülste am radial äußeren Umfang einer Felge angeordnet sind, werden auf Rundlauf mit einer zweigeteilten Prüffelge gemessen, die von außen an den Reifen herangeführt wird. Die beiden axial gegeneinander verfahrbaren Prüffelgenteile nehmen dabei den Reifen mit seinen Wulstsitzflächen in gleicher Weise auf, wie den Fahrzeugreifen während des Fahrbetriebs. Bei einem neu entwikkelten Reifen-Felgen-System, wie es in der DE-OS 30 00 428 beschrieben ist, bei dem der Reifen mit seinen Wülsten am radial inneren Umfang der Felge angeordnet ist, besteht das Problem, daß die Prüffelge in das Innere des Reifens eingeführt werden muß, dabei jedoch einen größeren Durchmesser hat, als der Innendurchmesser des Reifens beträgt.

In der DE-OS 35 41 188 ist dazu vorgeschlagen worden, die axial verschiebbaren Felgenhälften aus mehreren radial verstellbaren Felgensegmenten aufzubauen. Eine derartige Meßfelge kann im radial zusammgefahrenen Zustand, d.h., mit verkleinertem Durchmesser, in den einen kleineren Innendurchmesser aufweisenden Reifen eingefahren und in Meßposition auseinander gefahren werden. Problematisch dabei ist jedoch, daß der Innenraum abgedichtet und die Reifenseitenwände aus ihrer Trapezform, in der sie geheizt werden, in den Montagezustand gebracht werden müssen.

Dazu ist in der deutschen Patentanmeldung P 36 04 023.1 vorgeschlagen worden, einen derartigen Luftreifen mit seitlich nach außen geklappten Seitenwänden und -wülsten, d.h., so wie er geheizt worden ist, auf Rundlauf zu messen. Die tatsächlichen Betriebsverhältnisse sind bei einer derartigen Vorrichtung jedoch nur bedingt reproduzierbar, und man ist nach wie vor bestrebt, Reifen in ihrer tatsächlichen Montagestellung zu messen.

Aufgabe der vorliegenden Erfindung ist es, ein Verfahren, mit dem Reifen der eingangs beschriebenen Art geprüft werden können und eine Vorrichtung zur Durchführung dieses Verfahren zu schaffen.

Gelöst wird diese Aufgabe zunächst dadurch, daß gegen die axial auseinderfahrenden Felgenringhälften axial von außen Wulstaufnahmeringe gefahren werden, die Wulstaufnahmeringe die Seitenwände umbiegen und in Felgensitzposition zur Anlage an die Felgenringhälften bringen und der zu prüfende Reifen zwischen den Felgenringhälften und den Wulstaufnahmeringen festgeklemmt wird. Durch diese Maßnahmen wird ein Verfahren geschaffen, mit dem Reifen der eingangs beschriebenen Art schnell und einfach in ihre Montageposition gebracht und gemessen werden können.

Bei einer Vorrichtung zur Durchführung dieses Verfahrens ist es vorgesehen, daß die Felgenringhälften im Bereich ihres Felgenkranzes felgenhornlose, querabstehende Felgenkranzränder aufweisen, die Felgenkranzränder radial innen mit Abstufungen in Innenscheiben übergehen, die Wulstaufnahmeringe an ihren, den Felgenringhälften zugewandten Innenseiten mit radial nach außen weisenden, umlaufenden Halterippen versehen sind und die Halterippen in die Abstufungen axial einfahrbar sind. Durch diese Maßnahme wird eine Vorrichtung geschaffen, mit der ein trapezförmig geheizter Reifen schnell und einfach in Felgensitzposition gebracht werden kann, die leicht abzudichten ist und mit der innerhalb kürzester Zeit eine große Anzahl von Reifen gemessen werden können.

Weitere vorteilhafte Maßnahmen sind in den Unteransprüchen beschrieben. Die Erfindung ist in der beiliegenden Zeich nung dargestellt und wird nachfolgend näher beschrieben; es zeigt:

Fig. 1 eine Rundlauf-Meßvorrichtung mit zusammengefahrenen Felgenringhälften und auseinandergefahrenen Wulstaufnahmeringen, mit einem trapezförmigen Reifen;

Fig. 2 die Rundlauf-Meßvorrichtung nach der Fig. 1 mit zusammengefahrenen Felgenringhälften und Wulstaufnahmeringen, mit einem in Montagesposition umgebogenen Reifen;

Fig. 3 die Rundlauf-Meßvorrichtung nach der Fig. 1 mit auseinandergefahrenen Felgenringhälften und zusammengefahrenen Wulstaufnahmeringen, mit einem in Montagesposition umgebogenen Reifen;

Fig. 4 die Rundlauf-Meßvorrichtung nach der Fig. 1 mit auseinandergefahrenen Felgenringhälften und zusammengefahrenen Wulstaufnahmeringen, mit einem in Montagesposition festgeklemmten Reifen;

Fig. 5 die Detaildarstellung einer Rundlauf-Meßvorrichtung nach der Fig. 1 mit auseinandergefahrenen Felgenringhälften und zusammengefahrenen Wulstaufnahmeringen, mit einem zwischen dem Absatz eines Felgenrings und einer Wulstanlage in Montagesposition festgeklemmten Reifen.

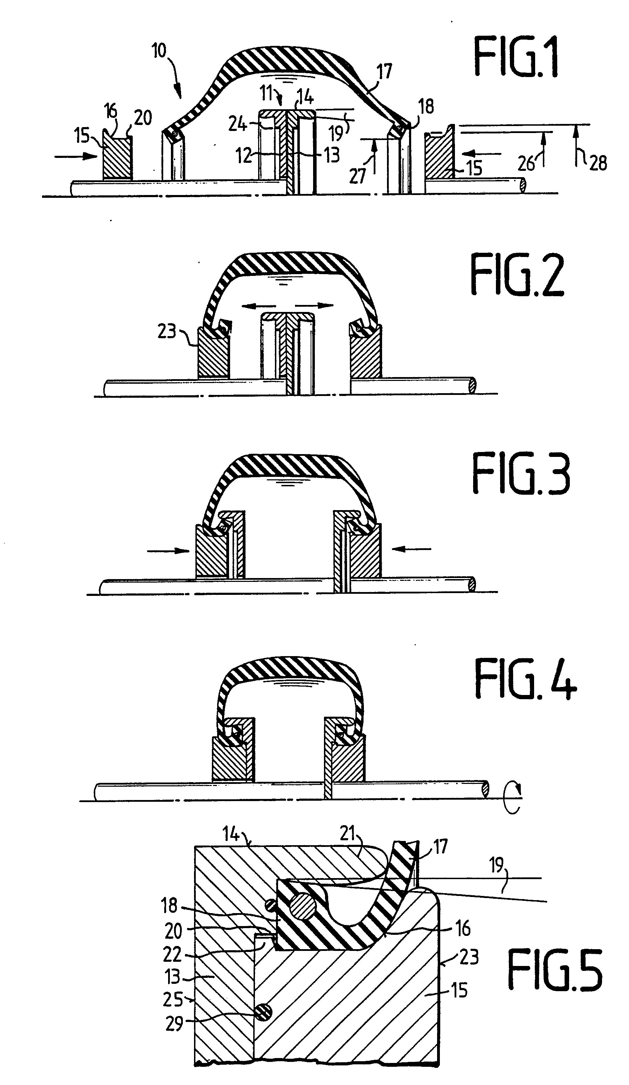

Die in den Figuren 1 bis 4 dargestellte Rundlauf-Prüfvorrichtung 10 besteht im wesentlichen aus einer Prüffelge 11 mit zwei axial gegeneinander verschiebbaren Felgenringhälften 12 und 13. Die Felgenringhälften 12 und 13 weisen in dem, in der Fig. 1 dargestellten, zusammengefahrenen Zustand radial außen einen gemeinsamen zylindrischen Felgenkranz 14 auf und können, wie die Figuren 3 und 4 zeigen, axial auf unterschiedliche Felgenmaulweiten verfahren werden.

Wie die Fig. 1 zeigt, wird der Reifen 17 zum Prüfen in seiner Trapezform über die Rundlauf-Prüfvorrichtung 10 gestülpt. Beim Auseinanderfahren der Felgenringhälften 12 und 13 auf die gewünschte Felgenmaulweite werden - wie die Fig. 3 zeigt - von außerhalb des Reifens 17 Wulstaufnahmeringe 15 axial gegen die Wülste 18 gefahren. Wie die Fig. 2 zeigt, werden dabei die Wülste 18 von den Wulstaufnahmeringen 15 nach axial innen umgebogen und in ihre Felgensitzposition gedrückt.

Wie die Fig. 5 zeigt, weisen die Wulstaufnahmeringe 15 Wulstsitzflächen 16 zur Aufnahme der Wülste 18 des Reifens 17 auf. Die Felgenringhälften 12 und 13 weisen Innenscheiben 25 auf, die im wesentlichen senkrecht zu dem achsparallel verlaufenden zylindrischen Felgenkranz 14 stehen. Der Felgenkranz 14 hat querabstehende Felgenkranzränder 21, mit denen er mit dem zu prüfenden Reifen 17 in Wirkverbindung bringbar ist. Jeder der querabstehenden Felgenkranzränder 21 weist in Querrichtung eine radial nach innen gerichtete Neigung 19 von fünf bis fünfzehn Grad auf, die axial innen in eine Abstufung 24 übergehen. Die Abstufungen 24 ihrerseits sind gegen die Innenscheiben 25 abgesetzt.

Jeder Wulstaufnahmering 15 weist axial innen eine umlaufende, radial nach außen weisende Halteripp 22 auf, deren Außendurchmesser 26 so bemessen ist, so daß die Wulstaufnahmeringe 15 mit diesen Halterippen 22 in die Abstufungen 24 eingefahren werden und zur Anlage mit den Innenscheiben 25 gebracht werden können.

Die Halterippen 22 weisen Demontageschrägen 20 auf, die axial nach innen, radial nach außen gerichtet sind. Der radial äußere Durchmesser 26 der Demontageschrägen 20 ist so bemessen, daß sie die Wülste 18 der Reifen 17 beim Zusammenfahren passieren können. Die Wulstaufnahmeringe 15 gehen nach axial außen in Außenscheiben 23 über, deren Durchmesser 28 größer als der Durchmesser des Reifens 17 im Bereich der trapezförmig ausgestellten Wülste 18 ist. Dadurch werden die Wülste 18 beim Zusammenfahren der Wulstaufnahmeringe 15 nach innen in ihre Felgensitzposition umgebogen und mit den querabstehenden Felgenkranzrändern 21 der Felgenringhälften 12 und 13 in Wirkverbindung gebracht und festgeklemmt. Zwischen den Wulstaufnahmeringen 15 und den Innenscheiben 25 der Felgenringhälften 12 und 13 können Dichtungen 27 vorgesehen sein, die den Innenraum des Reifens 17 nach außen abdichten.

**Ansprüche**

1. Verfahren zur Messung des Rundlaufs bei einem Fahrzeugluftreifen, der im Betriebszustand mit seinen Wülsten am radial inneren Umfang einer Felge befestigt ist, mit einer Prüffelge, mit zwei axial verfahrbaren Felgenringhälften, auf die ein zu prüfender, mit trapezförmig axial nach außen weisenden Seitenwänden gefertigter Reifen in dieser seiner Trapezform aufgezogen wird, dadurch gekennzeichnet, daß beim axialen Auseinderfahren der Felgenringhälften axial von außen Wulstaufnahmeringe gegengefahren werden, die Wulstaufnahmeringe die Seitenwände umbiegen und in Felgensitzposition zur Anlage an die Felgenringhälften bringen und der zu prüfende Reifen zwischen den Felgeringhälften und den Wulstaufnahmeringen festgeklemmt wird.

2. Vorrichtung zur Messung des Rundlaufs eines Fahrzeugluftreifens, der im Betriebszustand mit seinen Wülsten am radial inneren Umfang einer Felge befestigt ist, mit einer Prüffelge, die aus zwei axial verfahrbaren Felgenringhälften mit einem gemeinsamen Felgenkranz besteht, der zu prü fende Reifen trapezförmig mit axial nach außen weisenden Seitenwänden gefertigt und in dieser Trapezform auf die Prüffelge aufgezogen ist, insbesondere zur Durchführung eines Verfahrens nach Anspruch 1, dadurch gekennzeichnet, daß die Felgenringhälften (12, 13) im Bereich ihres Felgenkranzes (14) felgenhornlose, querabstehende Felgenkranzränder (21) aufweisen, die Felgenkranzränder (21) radial innen mit Abstufungen (24) in Innenscheiben (25) übergehen, die Wulstaufnahmeringe (15) an ihren, den Felgenringhälften (12, 13) zugewandten Innenseiten (23) mit radial nach außen weisenden, umlaufenden Halterippen (22) versehen sind und die Halterippen (22) in die Abstufungen (24) axial einfahrbar sind.

3. Vorrichtung nach Anspruch 2, dadurch gekennzeichnet, daß die axial verfahrbaren Felgenringhälften (12, 13) in Querrichtung nach innen weisende Neigungen (19) von fünf bis 15 Grad aufweisen.

4. Vorrichtung nach den Ansprüchen 2 und 3, dadurch gekennzeichnet, daß die axial verfahrbaren Wulstaufnahmeringe (15) im Bereich der Wulstanlagen (22) mit radial nach außen weisenden Demontageschrägen (20) versehen sind.

5. Vorrichtung nach den Ansprüchen 2 bis 4, dadurch gekennzeichnet, daß die Wulstaufnahmeringe (15) mit Dichtungen (27) gegenüber den Innenscheiben (25) abgedichtet sind.

6. Vorrichtung nach den Ansprüchen 2 bis 5, dadurch gekennzeichnet, daß die Prüffelge (11) als Mitlauffelge ausgebildet ist, auf die ein Reifen (17) während der Produktion und des Prüfens aufgezogen ist.

FIG.1

FIG.2

FIG.3

FIG.4

FIG.5